# EUROPÄISCHE PATENTANMELDUNG

(11) **EP 3 151 393 A1**
(43) Veröffentlichungstag der Anmeldung: **05.04.2017**
(21) Anmeldenummer: 15187620.8
(22) Anmeldetag: 30.09.2015
(51) Int. Cl.: H02K 9/10

(54) **ELEKTRISCHE MASCHINE MIT VARIABLEM KÜHLSYSTEM**

(71) Anmelder: Siemens Aktiengesellschaft, 80333 München (DE)
(72) Erfinder: Cepek, Thomas, 12487 Berlin (DE)

(57) **Zusammenfassung**

Die Erfindung betrifft eine elektrische Maschine (1) mit einer Luftkühlung, mit einem ersten Luftleitelement (2) zur Führung der Kühlluft und mit einem ersten Positionierelement (10) zur Positionierung des ersten Luftleitelementes (2) an einer Vielzahl von Positionen. Für Positionierelemente sind Halterungen vorgesehen. Die Halterung (6) können in einer axialen Richtung der elektrischen Maschine (1) ausgerichtet werden. So können für elektrische Maschinen Gehäuse gleichartiger Größe verwendet werden.

## Beschreibung

Die Erfindung betrifft eine elektrische Maschine mit einem variablen Kühlsystem.

Um die Verlustleistung von elektrischen Maschinen abzuführen, können diese mit unterschiedlichen Kühlungsvarianten ausgestattet werden. Eine Möglichkeit ist der Einsatz von Luft-Wasser-Kühlern als Kühleinrichtung. Um bei Maschinen mit großen Verlustleistungen die Kosten der Luft-Wasser-Kühler gering zu halten, werden sie für die Verlustleistung und die zur Verfügung stehende Wasserqualität bzw. Wassertemperatur optimiert. Das führt dazu, dass die Kühler jeweils spezielle Außenabmessungen haben (abhängig von der Parametern und den Typen unterschiedlicher Hersteller), die bei der Gestaltung eines Maschinengehäuses, also eines Gehäuses für die elektrische Maschine beachtet werden müssen. Die elektrische Maschine ist beispielsweise eine Synchronmaschine oder eine Asynchronmaschine welche als Motor und/oder Generator betreibbar ist. Sollte sich im Verlauf eines Projektes oder einer Fertigung der elektrischen Maschine ein Auslegungsparameter ändern, so ändern sich gegebenenfalls auch die Kühlergeometrie und/oder die Auslegung der Kühleinrichtung, also des Luft-Wasser-Kühlers. Entsprechend ist auch das Gehäuse ändern und/oder anzupassen. Änderungen am Gehäuse der elektrischen Maschine, in welches die Kühleinrichtung integriert ist, können auch dann notwendig sein, wenn zwar die Kühlleistung und/oder die Kühlparameter gleich bleiben, aber ein anderer Hersteller der Kühleinrichtung gewählt wird.

Eine Aufgabe der Erfindung ist es eine elektrische Maschine anzugeben, welche eine verbesserte Variabilität für das Kühlsystem bildet.

Eine Lösung der Aufgabe ergibt sich bei einer elektrischen Maschine nach Anspruch 1, bei elektrischen Maschinen nach Anspruch 11 und bei einem Verfahren zur Herstellung elektrischer Maschinen nach Anspruch 14. Ausgestaltungen der Erfindung ergeben sich nach den Ansprüchen 2 bis 10, 12, 13 und 15.

Bei einer elektrischen Maschine mit einer Luftkühlung ist ein erstes Luftleitelement zur Führung der Kühlluft vorgesehen. Ein erstes Positionierelement ist zur Positionierung des ersten Luftleitelementes an einer Vielzahl von Positionen vorgesehen. Mittels des Luftleitelementes ist die Kühlluft führbar. Durch das Positionierelement kann die Position des Luftleitelementes zumindest in der Fertigung der elektrischen Maschine oder auch danach festgelegt werden. Die Positionierung kann abhängig vom Platz- und/oder Raumbedarf von Teilen der elektrischen Maschine in dessen Gehäuse geändert werden. Weist die elektrische Maschine eine Kühleinrichtung wie z.B. einen Luft-Wasser-Kühler als Wärmetauscher auf, so können Kühleinrichtungen unterschiedlicher Größe in das Gehäuse der elektrischen Maschine eingebaut werden und abhängig von deren Platzbedarf die Luftleitelemente positioniert werden, damit sich ein gewünschter Verlauf der Kühlluft einstellt und sich beispielsweise keine Bypässe ergeben, welche die Kühlleistung reduzieren können. Das Luftleitelement ist beispielsweise ein Luftleitblech oder ein Element aus einem Kunststoff.

Durch einen oder mehrere variable positionierbare Luftleitelemente ist es nicht mehr in jedem Fall notwendig zu einem Luft-Wasser-Kühler passend ein spezielles Gehäuse auszulegen. Hierbei könnte beispielsweise die Geometrie der Öffnung zur Kühlermontage, also zur Montage er Kühleinrichtung, und ein Tropfschutz immer speziell abzustimmen sein.

Durch die variable Positionierung eines oder mehrerer Luftleitelemente ist es möglich Kühleinrichtungen wie einen Luft-Wasser-Kühler, unterschiedlicher Geometrie innerhalb vordefinierter Grenzen eines Gehäuses einer elektrischen Maschine einzusetzen, ohne dass das Gehäuse konstruktiv angepasst werden muss. Die Grenzen der Kühlergeometrie sind hierzu beispielsweise schon vorher zur elektrischen Maschinen abgestimmt worden.

In einer Ausgestaltung der elektrischen Maschine ist der Raum für die Kühleinrichtung, also insbesondere für den Luft-Wasser-Kühler, nach dem maximal möglichen Kühlermaßen ausgelegt. Es können folglich ein maximal großer Kühler und auch kleinere Kühler in den Raum aufgenommen werden.

Durch einen flexible anpassbaren Raum ist es z.B. möglich, eine Veränderung der Auslegungsparameter z.B. des Luft-Wasser-Kühlers bzw. einen Wechsel des Kühlerlieferanten noch in einem Projektfortschritt für den Bau der elektrischen Maschine zu realisieren, ohne dass dazu die Konstruktion des Gehäuses der elektrischen Maschine angepasst werden muss. Einzig der Kühlerdeckel müsste in diesem Fall vielleicht angepasst werden. So sind dann keine teuren und/oder zeitaufwendigen Änderungen der Fertigungszeichnungen notwendig. Auch sind entweder der Umbau des Gehäuses oder sogar ein Neubau des Gehäuses, sofern dieses bereits in der Fertigung war vermeidbar. Neben den Kosten ist hier auch die Verlängerung des Fertigungsdurchlaufs bis hin zu Verschiebungen des Liefertermins nicht mehr problematisch.

In einer Ausgestaltung der elektrischen Maschine weist diese eine erste Halterung für das Positionierelement auf. Die Halterung ist beispielsweise eine Schiene in der ein Positionierelement eingehängt werden kann. Die Halterung ist beispielsweise eine Reihe von Löchern, in welche das Positionierelement eingesteckt und/oder eingeschraubt werden kann. So kann die Position des Positionierelementes, welches beispielsweise eine Art Haken aufweist, abhängig von der Größe des Kühlers, also der Kühleinrichtung, frei gewählt werden.

In einer Ausgestaltung der elektrischen Maschine wird die Aufnahme der Kühleinrichtung und damit auch des Kühlergewichts und die Luftführung durch verstellbare sogenannte Kühlerkulissen realisiert. Die Kühlerkulisse wird entsprechend der Kühlergeometrie verschoben und dann ggf. fixiert. Dabei weist die Kühlerkulisse insbesondere ein Positionierelement auf.

Weist die elektrische Maschine einen Tropfschutz, auch Tropffang genannt, auf, so kann der Tropfschutz einheitlich auf den größtmöglichen Kühler dimensioniert sein.

Weist die elektrische Maschine einen Verschlussdeckel am Gehäuse für den Einbau und/oder Anschluss der Kühleinrichtung auf, so kann dieser abhängig von der eingesetzten Kühleinrichtung angepasst werden.

In einer Ausgestaltung der elektrischen Maschine ist die erste Halterung in einer axialen Richtung der elektrischen Maschine ausgerichtet. Ein Positionierelement oder eine Vielzahl von Positionierelementen können so unterschiedlich axial positioniert werden. Die axiale Richtung ist durch die Achse der Welle der elektrischen Maschine bestimmt.

In einer Ausgestaltung der elektrischen Maschine weist das erste Luftleitelement ein flexibles Endstück auf. Wird das Luftleitelement zusammen mit dem Positionierelement verschoben bzw. an unterschiedlichen Positionen positioniert, so kann durch das flexible Endstück ein guter Luftabschluss erzielt werden. Die Flexibilität erreicht man beispielsweise durch die Biegefähigkeit eines Bleches und/oder durch flexible Materialien wie Silikon oder Gummi.

In einer Ausgestaltung der elektrischen Maschine ist das erste Luftleitelement zur Ausbildung eines Kühlkreislaufes vorgesehen. Der Kühlkreislauf ist beispielsweise eine Kreuzbelüftung. Das Luftleitelement trennt beispielsweise erwärmte Luft von gekühlter Luft. In einer Ausgestaltung der elektrischen Maschine trennt also das erste Luftleitelement einen ersten Kühlluftstromabschnitt von einem zweiten Kühlluftstromabschnitt. Dabei ist in einer Ausgestaltung der elektrischen Maschine der erste Kühlluftstromabschnitt dem zweiten Kühlluftstromabschnitt entgegengesetzt.

In einer Ausgestaltung der elektrischen Maschine ist der erste Kühlluftstromabschnitt erwärmt und der zweite Kühlluftstromabschnitt gekühlt. Dazwischen hat die Kühlluft folglich die Kühleinrichtung durchströmt.

In einer Ausgestaltung der elektrischen Maschine ist das erste Luftleitelement an einer Bedienseite der elektrischen Maschine angeordnet und ein zweites Luftleitelement an einer Antriebsseite der elektrischen Maschine angeordnet. So kann in einfacher Weise eine Kreuzbelüftung erreicht werden.

In einer Ausgestaltung der elektrischen Maschine ist das erste Luftleitelement oder es sind eine Vielzahl von Luftleitelementen in einer radialen Position angeordnet, welche durch den Abstand zwischen einer Kühleinrichtung und dem Stator der elektrischen Maschine vorgegeben ist. Das Luftleitelement bzw. die Luftleitelemente befinden sich also ganz oder teilweise zwischen dem Stator und der Kühleinrichtung, wenn man deren Abstand von der Achse der Welle der elektrischen Maschine betrachtet.

In einer Ausgestaltung von elektrischen Maschinen gibt es eine erste elektrische Maschine mit einem ersten Gehäuse und eine zweite elektrische Maschine mit einem zweiten Gehäuse, wobei das erste Gehäuse und das zweite Gehäuse eine gleichartige Größe haben, wobei im ersten Gehäuse und im zweiten Gehäuse ein Luftleitelement gleichartiger Funktion an unterschiedlichen Positionen angeordnet ist. Die elektrischen Maschinen betreffen beispielsweise eine Baureihe. Die elektrischen Maschinen weisen insbesondere unterschiedliche Leistungen auf. Abhängig von der Leistung kann auch die Kühlung unterschiedlich sein. Weist die erste elektrische Maschine eine höhere Leistung (insbesondere Nennleistung und/oder Maximalleistung) als die zweite elektrische Maschine auf, so kann für die erste elektrische Maschine eine erste Kühleinrichtung mit höherer Kühlleistung vorgesehen sein als für die zweite elektrische Maschine mit der zweiten Kühleinrichtung. Die erste Kühleinrichtung weist also eine höhere Kühlleistung auf als die zweite Kühleinrichtung. Das Gehäuse beider elektrischer Maschinen kann von den Außenabmessungen gleich sein.

In einer Ausgestaltung der elektrischen Maschinen ist die Lage und/oder Position der Halterung, insbesondere einer Tragschiene, in der ersten elektrischen Maschine gleich zur zweiten elektrischen Maschine. Die Halterung ist insbesondere fest mit dem Gehäuse der elektrischen Maschine verbunden. Dies gelingt beispielsweise durch eine Schweißverbindung aber auch durch eine Nietverbindung.

In einer Ausgestaltung der elektrischen Maschinen ist die Luftführung zur Kühleinrichtung innerhalb des Gehäuses der ersten bzw. zweiten elektrischen Maschine variabel. Dabei kann in der ersten elektrischen Maschine ein zur zweiten elektrischen Maschine unterschiedlicher Tropfschutz verwendet sein. Es ist aber auch möglich in beiden elektrischen Maschinen den gleichen Tropfschutz vorzusehen um beispielsweise die Anzahl der Gleichteile zu erhöhen. Ein gleicher Tropfschutz kann zu einer Maximalanforderung für den Tropfschutz abgestimmt sein. Auch eine Öffnung im Gehäuse der elektrischen Maschine zur Montage der Kühleinrichtung kann maximal ausgelegt sein, damit bei gleichem Gehäuse für unterschiedliche elektrische Maschinen unterschiedliche Kühleinrichtungen eingebaut werden können.

In einer Ausgestaltung der elektrischen Maschinen, also der zumindest zwei elektrischen Maschine sind die unterschiedlichen Positionen der Kühleinrichtungen, also der ersten Kühleinrichtung der ersten elektrischen Maschine und der zweiten Kühleinrichtung der zweiten elektrischen Maschine an die unterschiedlichen Größen der Kühleinrichtungen angepasst.

Bei einem Verfahren zur Herstellung elektrischer Maschinen ein Gehäusetyp für elektrische Maschinen unterschiedlicher Leistung verwendet, wobei Luftleitelemente abhängig von der Leistung der elektrischen Maschine an unterschiedlichen Positionen innerhalb des Gehäuses positioniert werden. Der Gehäusetyp für zumindest zwei elektrische Maschinen unterschiedlicher Leistung weist insbesondere zumindest gleiche Außenabmessungen auf.

Nachfolgend wird die Erfindung beispielhaft auf Basis unterschiedlicher Figur beschrieben. Dabei zeigt:
- FIG 1: eine erste Außenansicht einer elektrischen Maschine;
- FIG 2: eine erste Innenansicht einer elektrischen Maschine;
- FIG 3: eine zweite Außenansicht einer elektrischen Maschine;
- FIG 4: eine zweite Innenansicht einer elektrischen Maschine;
- FIG 5: eine dritte Innenansicht einer elektrischen Maschine;
- FIG 6: eine vierte Innenansicht einer elektrischen Maschine;
- FIG 7: eine fünfte Innenansicht einer elektrischen Maschine und
- FIG 8: eine sechste Innenansicht einer elektrischen Maschine.

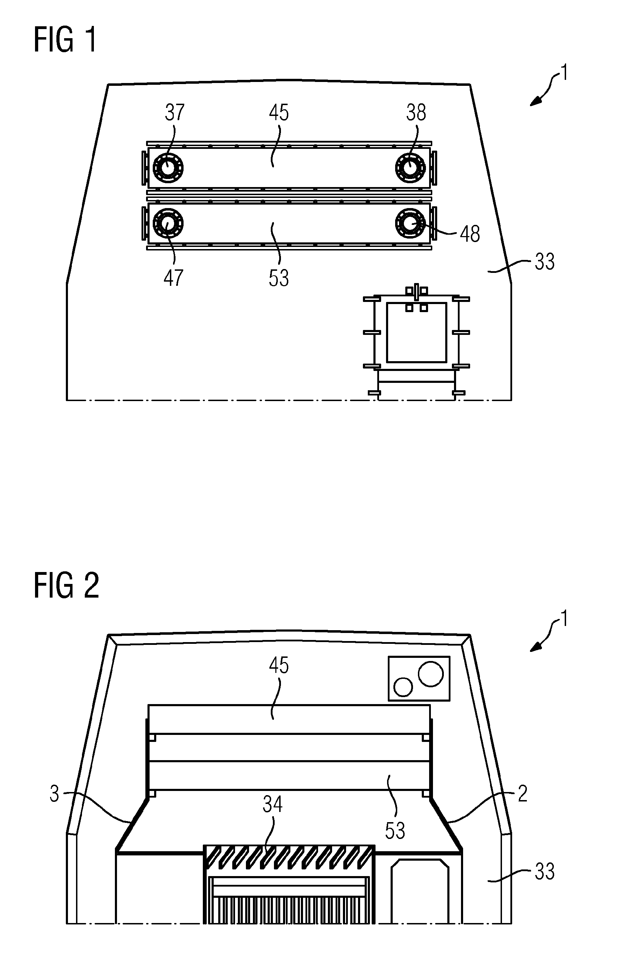

Die Darstellung nach FIG 1 zeigt in einem Ausschnitt eine erste Außenansicht einer elektrischen Maschine 1. Weitere Ausgestaltungen elektrischer Maschinen werden auch in den nachfolgend beschriebenen Figuren gezeigt, wobei gleichartige Elemente mit den gleichen Bezugszeichen versehen sind. Die elektrische Maschine 1 nach FIG 1 zeigt ein Gehäuse 33 der elektrischen Maschine, wobei vier Anschlüsse für Kühlflüssigkeit 37, 38, 47 und 48 vorgesehen sind. Die Anschlüsse 37 und 38 sind für eine erste Kühleinrichtung 45 vorgesehen und die Anschlüsse 47 und 48 sind für eine zweite Kühleinrichtung 53 vorgesehen. Die Kühleinrichtungen 45 und 53 sind beispielsweise Luft/Wasser-Kühler.

Die Darstellung nach FIG 2 zeigt eine erste Innenansicht der elektrischen Maschine 1 mit zwei Kühleinrichtungen 45 und 53. Über ein erstes Luftleitelement 2 und ein zweites Luftleitelement 3 kann die Kühlluft geführt werden. Die Luftleitelemente 2 und 3 können auch die Funktion einer Tragstruktur zum Tragen der ersten Kühleinrichtung 45 und der zweiten Kühleinrichtung 53 übernehmen. Damit ein Stator der elektrischen Maschine beispielsweise nicht auf lange Sicht durch Kondenswasser beschädigt wird ist ein Tropffang 34 vorgesehen.

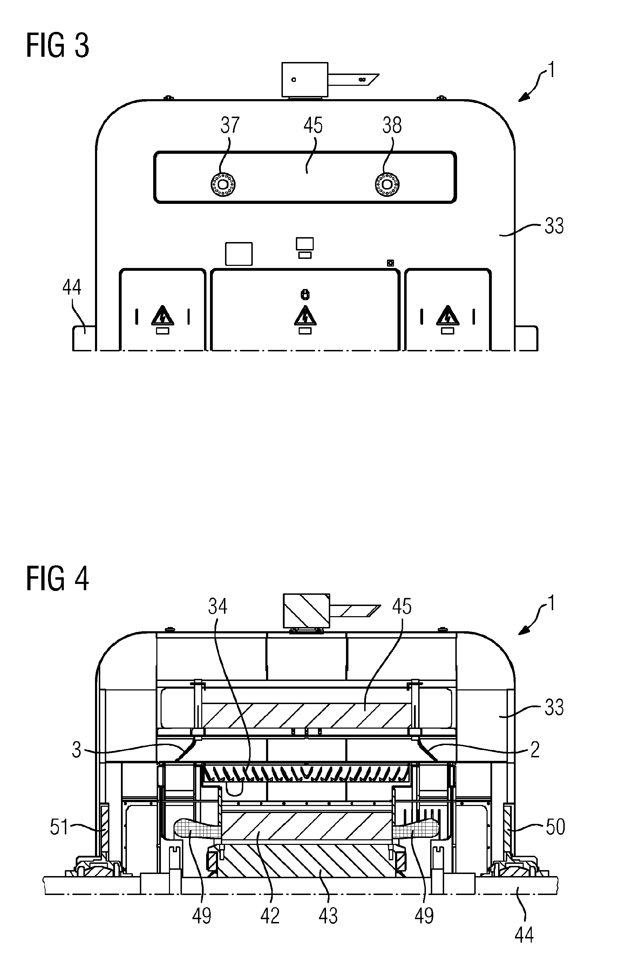

Die Darstellung nach FIG 3 zeigt in einem Ausschnitt eine zweite Außenansicht einer weiteren elektrischen Maschine 1, welche im Vergleich zur elektrischen Maschine nach Figur 1 nur eine Kühleinrichtung 53 aufweist. Zum Anschluss an Kühlflüssigkeit sind auch hier die Anschlüsse 37 und 38 vorgesehen. Nach FIG 3 ist auch eine Welle 44 der elektrischen Maschine 1 im Ansatz gezeigt.

Die Darstellung nach FIG 4 zeigt eine zweite Innenansicht der elektrischen Maschine 1 nach FIG 3 mit der nur einen Kühleinrichtung 53. Über das erste Luftleitelement 2 und das zweite Luftleitelement 3 kann auch hier die Kühlluft geführt werden. Die Luftleitelemente 2 und 3 können auch die Funktion einer Tragstruktur zum Tragen der Kühleinrichtung 53 übernehmen. Damit der Stator 42 der elektrischen Maschine, welche auch einen Rotor 43 aufweist, nicht benetzt wird ist der Tropffang 34 vorgesehen. Die Luftleitelemente 2 und 3 können vorteilhaft flexibel an unterschiedlichen Positionen befestigt werden. Betrachtet man die axiale Position der Luftleitelemente 2 und 3, so befinden diese sich axial im Bereich der beiden Wickelköpfe 49. Die elektrische Maschine 1 weist auch Lagerschilde 50 und 51 auf.

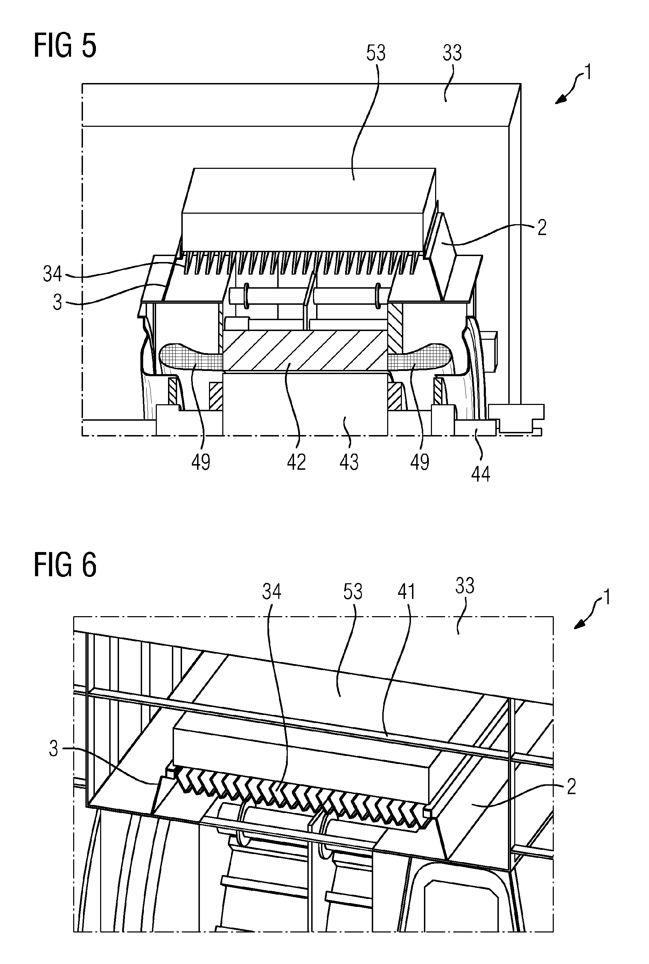

Die Darstellung nach FIG 5 zeigt eine dritte Innenansicht einer elektrischen Maschine 1, wobei die Luftleitelemente 2 und 3 perspektivisch dargestellt sind.

Die Darstellung nach FIG 6 zeigt eine vierte Innenansicht einer elektrischen Maschine 1, wobei im Detail ein Gehäuserahmen 41 des Gehäuses 33 gezeigt ist. Auch die Darstellung des Tropffanges 34 erfolgt in einer größeren Detailtiefe. Dabei wird ersichtlich, dass der Tropffang 34 eine Vielzahl von Rinnen aufweist, welche durch eine Vielzahl von L-Strukturen gebildet werden. Die L-Strukturen sind beispielsweise Bleche, welche derart gebogen sind, dass diese einen L-förmigen Querschnitt aufweisen.

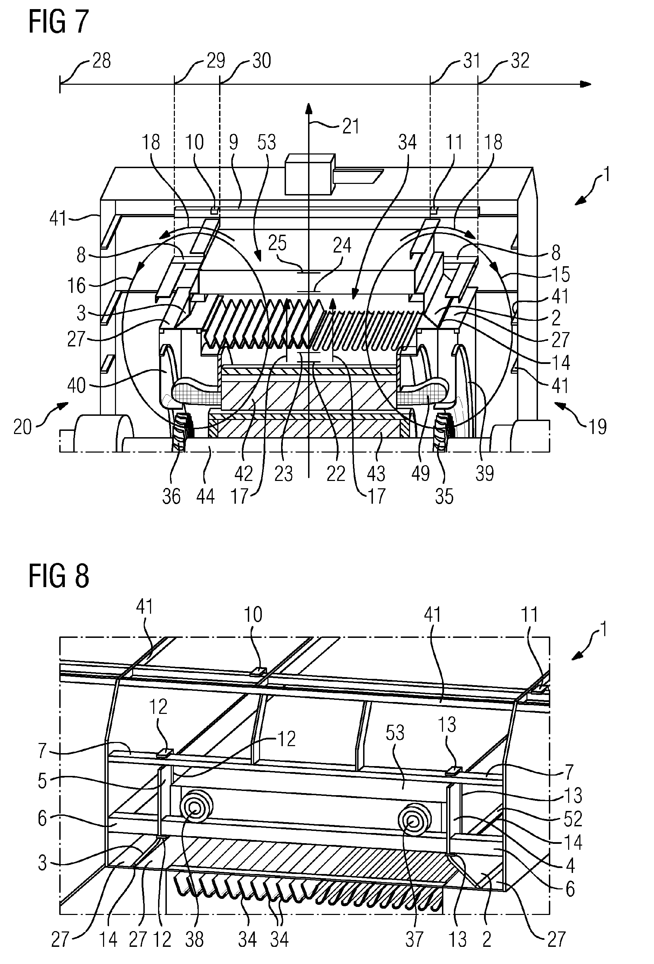

Die Darstellung nach FIG 7 zeigt eine fünfte Innenansicht einer elektrischen Maschine 1. Innerhalb des Gehäuses 33 mit dem Gehäuserahmen 41 befinden sich der Stator 42 und der Rotor 43 der elektrischen Maschine. Auf der Welle 44 befinden sich Lüfter 35 und 36 zur Erzeugung eines Kühlluftstromes 15 bzw. 16. Dargestellt ist eine Kreuzbelüftung mit einem ersten Kühlluftstromkreislauf 15 auf einer Antriebsseite 19 der elektrischen Maschine 1 und einem zweiten Kühlluftstromkreislauf 16 auf einer Bedienseite 20 der elektrischen Maschine. Dabei wird die Kühlluft, insbesondere an den Wickelköpfen 49, entlang geführt, um auch diese zu kühlen. Der Lüfter 35 befindet sich in einem Lüfterkanal 39, welcher die Kühlluft axial führt wie auch radial führt. Zur radialen Führung weist der Lüfterkanal 39 eine Art Scheibenstruktur auf, welche senkrecht zur Welle 44 angeordnet ist und gekühlte Kühlluft von erwärmter Kühlluft trennt. Der Lüfter 36 befindet sich in einem Lüfterkanal 40, welcher die Kühlluft axial führt wie auch radial führt. Zur radialen Führung weist auch der Lüfterkanal 44 eine Art Scheibenstruktur auf, welche senkrecht zur Welle 44 angeordnet ist und gekühlte Kühlluft von erwärmter Kühlluft trennt.

Der erste Kühlluftstromkreislauf 15 wie auch der zweite Kühlluftstromkreislauf 16 weisen einen ersten Kühlluftstromabschnitt 17 mit erwärmter Kühlluft auf wie auch einen zweiten Kühlluftstromabschnitt 18 mit gekühlter Kühlluft. Die erwärmte Kühlluft ist vom Rotor 43 und/oder Stator 42 erwärmt. Die gekühlte Kühlluft ist durch die Kühleinrichtung 53 gekühlt, welche eine Luft-Wasser-Kühlung ist. Zur Positionierung der Kühleinrichtung 53 ist ein erstes Positionierelement 10 und ein zweites Positionierelement 11 vorgesehen. Die Positionierelemente 10 und 11 befinden sich in einer Halterung 9 und/oder in oder an einer Halterung 8. Die Positionierelemente 10 und 11 können längs der Halterungen 8 und 9 positioniert bzw. verschoben werden. Durch die Positionierelemente 10 und 11 wird die Tragstruktur für die Kühleinrichtung 53 vorgegeben, damit diese über dem Tropffang positioniert werden kann. Die Größe der Tragstruktur ist der Größe der Kühleinrichtung durch die variable Positionierung der Positionierelemente 10 und 11 angepasst.

In der FIG 8 sind ein erstes Positionierelement 10, ein zweites Positionierelement 11, ein drittes Positionierelement 12 und ein viertes Positionierelement 13 gezeigt. Ferner sind in der FIG 8 eine erste Halterung 6, eine zweite Halterung 7, eine dritte Halterung 8 und eine vierte Halterung 9 gezeigt. Nach der FIG 7 sind die dritte Halterung 8 und die vierte Halterung 9 gezeigt. Die Positionierelemente 10 und 11 können beispielsweise in die vierte Halterung 9 wie in eine Schiene eingehängt werden. Dies gilt entsprechend für die dritte Halterung 8. FIG 7 zeigt einen axial ausgerichteten Pfeil mit axialen Positionen, einer axial ersten Position 28, einer axial zweiten Position 29, einer axial dritten Position 30, einer axial vierten Position 31 und einer axial vierten Position 32. Das erste Positionierelement 10, welches beispielsweise hakenförmig ausgebildet ist, kann beispielsweise zwischen der zweiten axialen Position 29 und der dritten axialen Position 30 positioniert werden. Diese Positionen befinden sich auf der Bedienseite 20 der elektrischen Maschine, welche auch durch die erste axiale Position 28 angezeigt ist. Das zweite Positionierelement 11, welches beispielsweise auch hakenförmig ausgebildet ist, kann beispielsweise zwischen der vierten axialen Position 31 und der fünften axialen Position 32 positioniert werden. Diese Positionen befinden sich auf der Antriebsseite 19 der elektrischen Maschine. Die Kühleinrichtung 53, der Tropffang 34 und der Stator 42 befinden sich zueinander in bestimmten radialen Positionen. In der FIG 7 ist durch einen Pfeil eine radiale Richtung 21 angegeben. Hieraus sind verschiedene radiale Positionen ableitbar, wie eine erste radiale Position 22, eine zweite radiale Position 23, eine dritte radiale Position 24 und eine vierte radiale Position 25. Durch die dritte und vierte radiale Position 24 und 25 ist die radiale Position der Kühleinrichtung 53 bestimmt. Die erste und zweite radiale Position 22 und 23 gibt den Abstand zwischen Stator 42 und Tropffang 34 an. Damit nun keine warme Kühlluft aus dem Bereich zwischen Stator 42 und Kühleinrichtung 53 mit gekühlter Kühlluft vermischt wird sind Luftleitelemente 2 und 3 vorgesehen. Das erste Luftleitelement 2 trennt warme Kühlluft vor dem durchstreichen der Kühlleinrichtung 53 von der danach gekühlten kalten Kühlluft auf der Antriebsseite 19. Das zweite Luftleitelement 3 trennt warme Kühlluft vor dem durchstreichen der Kühlleinrichtung 53 von der danach gekühlten kalten Kühlluft auf der Bedienseite 20. Das erste Luftleitelement 2 ist mit dem zweiten Positionierelement 11 verbunden und kann mit diesem verschoben werden. Das zweite Luftleitelement 3 ist mit dem ersten Positionierelement 10 verbunden und kann mit diesem verschoben werden. Die Positionierelemente 10 und 11 können nach der Positionierung auch untrennbar mit dem Gehäuse verbunden werden, was z.B. mittels einer Schweißverbindung möglich ist. Die Luftleitelemente 2 und 3 liegen jeweils auf einer Aufsetzfläche 27 auf und schließen mit dieser ab, damit die warme Kühlluft von der kalten Kühlluft getrennt ist. Werden die Luftleitelemente 2 und 3 verschoben, so verschiebt sich auch deren Aufsetzposition auf der jeweiligen Positionierfläche 27.

Die Darstellung nach FIG 8 zeigt eine sechste Innenansicht einer elektrischen Maschine 1, welche im Vergleich zu der in FIG 7 den Bereich um die Kühleinrichtung 53 genauer darstellt. Die Kühleinrichtung 53 weist Anschlüsse 37 und 38 für Kühlflüssigkeit auf. Gehalten wird die Kühleinrichtung 53 durch einen Tragrahmen 52, der zumindest teilweise auch durch die Positionierelemente gebildet ist. Nach der FIG 8 sind nicht nur das erste und zweite Positionierelement 10 und 11 abgebildet, sondern auch das vierte und fünfte Positionierelement 12 und 13. Das dritte Positionierelement 12 ist durch die erste Halterung 6 und die zweite Halterung 7 geführt. Das vierte Positionierelement 13 ist auch durch die erste Halterung 6 und die zweite Halterung 7 geführt. Nach FIG 8 sind ein erstes und zweites Luftleitelement 2 und 3 gezeigt, welche ein flexibles Endstück 14 beispielsweise aus einem Silikonmaterial endseitig aufweisen, damit der Bereich wärmer Kühlluft vom Bereich kalter Kühlluft abgetrennt ist und sich ein Kreislauf für die Kühlluft ausbilden kann. Hierfür ist auch ein drittes Luftleitelement 4 und ein viertes Luftleitelement 5 vorgesehen, welche Kühlluftströme in einer tangentialen Richtung in einer Art Fortführung der Kühleinrichtung voneinander trennen. Mittels der dargestellten Positionierelemente 10 bis 13 lässt sich eine flexibel in seiner Größe veränderbare Tragstruktur für Kühleinrichtungen unterschiedlicher Größe ausbilden. Die Positionierelemente 10 bis 13 werden über Halterungen 6 bis 9 am Gehäuse 33 gehalten. Mit den Positionierelementen 10 bis 13 ist auch die jeweilig zugeordneten Luftleitelemente 2 bis 5 verschiebbar. Die Luftleitelemente 2 und 3 schließen auf eine Aufsetzfläche 27 ab um einen Kühlluftkreislauf ausbilden zu können.

## Patentansprüche

1. Elektrische Maschine (1) mit einer Luftkühlung, mit einem ersten Luftleitelement (2) zur Führung der Kühlluft, mit einem ersten Positionierelement (10) zur Positionierung des ersten Luftleitelementes (2) an einer Vielzahl von Positionen.

2. Elektrische Maschine (1) nach Anspruch 1, mit einer ersten Halterung (6) für das Positionierelement (10).

3. Elektrische Maschine (1) nach Anspruch 1 oder 2, wobei die erste Halterung (6) in einer axialen Richtung der elektrischen Maschine (1) ausgerichtet ist.

4. Elektrische Maschine (1) nach einem der Ansprüche 1 bis 3, wobei das erste Luftleitelement (2) ein flexibles Endstück (14) aufweist.

5. Elektrische Maschine (1) nach einem der Ansprüche 1 bis 4, wobei das erste Luftleitelement (2) zur Ausbildung eines Kühlkreislaufes (15) vorgesehen ist.

6. Elektrische Maschine (1) nach einem der Ansprüche 1 bis 5, wobei das erste Luftleitelement (2) einen ersten Kühlluftstromabschnitt (17) von einem zweiten Kühlluftstromabschnitt (18) trennt.

7. Elektrische Maschine (1) nach einem der Ansprüche 1 bis 6, wobei der erste Kühlluftstromabschnitt (17) dem zweiten Kühlluftstromabschnitt (18) entgegengesetzt ist.

8. Elektrische Maschine (1) nach einem der Ansprüche 1 bis 7, wobei der erste Kühlluftstromabschnitt (17) erwärmt ist und der zweite Kühlluftstromabschnitt (18) gekühlt ist.

9. Elektrische Maschine (1) nach einem der Ansprüche 1 bis 8, wobei das erste Luftleitelement (2) an einer Bedienseite (20) der elektrischen Maschine (1) angeordnet ist und ein zweites Luftleitelement (2) an einer Antriebsseite (19) der elektrischen Maschine (1) angeordnet ist.

10. Elektrische Maschine (1) nach einem der Ansprüche 1 bis 9, wobei das erste Luftleitelement (2) oder eine Vielzahl von Luftleitelementen (2,3,4,5) in einer radialen Position angeordnet ist, welche durch den Abstand zwischen einer Kühleinrichtung (53) und dem Stator (42) der elektrischen Maschine (1) vorgegeben ist.

11. Elektrische Maschinen (1) mit einer ersten elektrischen Maschine mit einem ersten Gehäuse (33) und einer zweiten elektrischen Maschine mit einem zweiten Gehäuse, wobei das erste Gehäuse und das zweite Gehäuse eine gleichartige Größe haben, wobei im ersten Gehäuse und im zweiten Gehäuse ein Luftleitelement (2) gleichartiger Funktion an unterschiedlichen Positionen angeordnet ist.

12. Elektrische Maschinen (1) nach Anspruch 11, wobei die unterschiedlichen Positionen der Kühleinrichtung (53) unterschiedlichen Größen angepasst sind.

13. Elektrische Maschinen (1) nach Anspruch 11 oder 12, wobei die erste elektrische Maschine und/oder die zweite elektrische Maschine eine elektrische Maschine (1) nach einem der Ansprüche 1 bis 10 ist.

14. Verfahren zur Herstellung elektrischer Maschinen (1), wobei ein Gehäusetyp für elektrische Maschinen unterschiedlicher Leistung verwendet wird, wobei Luftleitelemente (2) abhängig von der Leistung der elektrischen Maschine an unterschiedlichen Positionen innerhalb des Gehäuses positioniert werden.

15. Verfahren nach Anspruch 14, wobei elektrische Maschinen nach einem der Ansprüche 11 bis 13 verwendet werden.
